# EUROPEAN PATENT APPLICATION

(11) **EP 0 609 765 A2**
(43) Date of publication of application: **10.08.1994**
(21) Application number: 94101130.6
(22) Date of filing: 26.01.1994
(51) Int. Cl.: G02B 6/28

(54) **Reinforced multicore optical fiber coupler**

(30) Priority: 02.02.1993 JP 15134/93
(71) Applicant: SUMITOMO ELECTRIC INDUSTRIES, LTD., Osaka-shi, Osaka 541 (JP)
(72) Inventor: Hattori, Tomoyuki, c/o Yokohama Works, Yokohama-shi, Kanagawa (JP); Suganuma,Hiroshi, c/o Yokohama Works, Yokohama-shi, Kanagawa (JP); Sasaoka, Eisuke, c/o Yokohama Works, Yokohama-shi, Kanagawa (JP); Takimoto, Hiroaki, c/o Yokohama Works, Yokohama-shi, Kanagawa (JP)
(74) Representative: Grünecker, Kinkeldey, Stockmair & Schwanhäusser Anwaltssozietät

(57) **Abstract**

A reinforced structure for a multicore optical fiber coupler wherein a longitudinal coating resin (32) of a multicore optical fiber, having a plurality of optical fiber strands (31) positioned in parallel arrangement to each other and collectively coated with a common coating resin, is partially removed so as to expose the glass portions of the optical fiber strands. The exposed glass portions are then fused and extended. The non-extended portions (33b) on the opposite sides of the fused and extended portion (33a) of the glass portion of each of the plurality of optical fiber strands in the extending direction are accommodated respectively in a plurality of grooves (22) formed in a reinforcing casing (21c). The reinforcing casing is made of a material having substantially the same coefficient of linear expansion as that of quartz.

## Description

### BACKGROUND OF THE INVENTION

The present invention relates generally to a reinforced multicore optical fiber coupler formed by fusing and extending a plurality of optical fibers.

It has been recognized that, due to the small diameter of optical fiber couplers (e.g., preferably sized to have an outer diameter on the order of 10 µm), an external force or temperature change can cause its propagation characteristics to change and, in some cases, cause physical damage to the coupler.

A now conventional way of dealing with this problem has been to use a reinforcing base having substantially the same coefficient of linear expansion as that of quartz. The reinforcing base protects the optical fibers from external forces so as to allow them to maintain a stable characteristic. One example of such a reinforcing base is the plate-like member disclosed in Japanese Utility Model Unexamined Publication No. Sho. 64-24308. Another example of such a reinforcing base is the pipe-like member disclosed in Japanese Patent Unexamined Publication No. Sho. 64-63907. A thermosetting or ultraviolet setting adhesive of an epoxy group, an urethaneacrylate group, or a cyanoacrylate group has been used as a fixing adhesive in such conventional optical fiber couplers.

Recently, advances in the technology of optical fiber communication lines have resulted in systems having a higher density of such lines, as well as an increase in the number of optical fiber couplers used. However, these advances have caused further problems to be overcome. Conventional couplers are constituted by a pair of optical fibers. By increasing the density of the optical fiber communication lines and the required number of optical fiber couplers, the lines and couplers take up a considerable amount of space. Moreover, complications arise in accommodating the residual length of the optical fibers on the opposite ends of the optical fiber coupler.

To overcome these problems, it is known to form an optical fiber coupler constituted by two optical fibers fixed on a reinforcing material. A plurality of reinforcing materials are accommodated in a single package. The optical fibers outside the package are formed into a tape-like multicore coated optical fiber bundle. An example of this conventional arrangement is disclosed in Japanese Patent Unexamined Publication No. Hei. 1-295211. Further known in the art is an arrangement in which optical fiber couplers, each containing two optical fibers, are arranged on a comb-tooth-like fixing member having a plurality of grooves that provide reinforcement. An example of such an arrangement is disclosed in Japanese Patent Unexamined Publication No. Sho. 63-254406.

In the conventional arrangements disclosed in Japanese Patent Unexamined Publication Nos. Hei 1-295211 and Sho. 63-254406, however, the optical fibers mounted on the optical fiber couplers are of a high density. Due to the high density of the optical fibers, a long time is required for forming a multicore optical fiber coupler according the foregoing arrangements.

To overcome the above mentioned problem of delay in forming the multicore optical fiber coupler, it is known in the art to directly produce a multicore optical fiber coupler from multicore coated optical fibers. An example of this method is disclosed in Japanese Patent Unexamined Publication No. Hei 1-120510. When coated optical fibers are fixed by using a reinforcing base, the whole non-extended portions and coating portions comprising the glass portions of the coated optical fibers are fixed by using an adhesive. This functions to thereby produce a multicore optical fiber coupler. Consequently, a problem arises in that deformation of the adhesive causes the transmission characteristic of the optical fiber coupler to undergo remarkable change when subjected to external forces, such as a temperature change and high humidity.

### SUMMARY OF THE INVENTION

It is, therefore, an object of the present invention to provide a reinforcing arrangement for a multicore optical fiber coupler that is not adversely affected by changes in external forces. The longitudinal coating resin of a multicore optical fiber, having a plurality of optical fiber strands positioned in parallel arrangement to each other and collectively coated with a common coating resin, is partially removed so as to expose the glass portions of the optical fiber strands. The exposed glass portions are then fused and extended. The non-extended portions on the opposite sides of the fused and extended glass portions of each of the plurality of optical fiber strands in the extending direction are accommodated respectively in a plurality of grooves formed in a reinforcing casing. The reinforcing casing is made from a material having substantially the same coefficient of linear expansion as that of quartz.

This and other objects, features and advantages of the present invention will become apparent from the following detailed description when taken in conjunction with the accompanying drawings which illustrate, by way of example, the principles of the invention.

### BRIEF DESCRIPTION OF THE DRAWINGS

The accompanying drawings illustrate the invention. In such drawings:
FIG. 1 is a schematic view of a method for producing a multicore optical fiber coupler.
FIGS. 2(a) through 2(c) are schematic views illustrating the reinforcing casings according to embodiments of the present invention.
FIGS. 3(a) through 3(c) are cross-sectional views illustrating multicore coated optical fibers.
FIGS. 4(a) through 4(c) are schematic views illustrating multicore coated optical fibers in a molded state.
FIGS. 5(a) and 5(b) are schematic views illustrating a conventional reinforcing casing and its molded state.

### DETAILED DESCRIPTION OF THE INVENTION

A detailed description of the present invention is provided below. As used in this patent application, "optical fiber strand" is defined as an optical fiber of quartz-group glass having a protective coating layer formed thereon. Generally, the protective coating layer preferably comprises a two-layer coating of a soft material having a Young's modulus not larger than 1 kg/mm² and a hard material having a Young's modulus not less than 10 Kg/mm². Further, the optical fiber may contain an additional colored layer as the outermost layer of the protective coating layer for the purposes of discrimination.

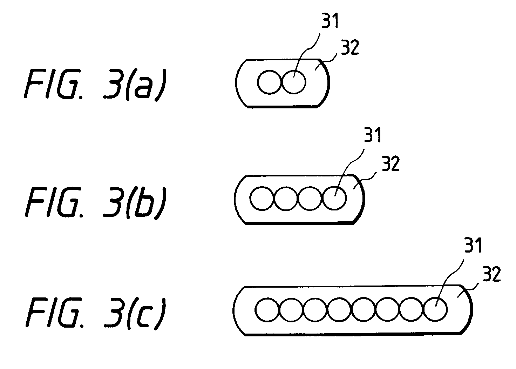

According to the present invention, a multicore coated optical fiber includes a plurality of optical fiber strands that are positioned parallel with one another and are collectively coated with a common coating resin. Referring now to the drawings, and particularly to FIGS. 3(a) through 3(c), a multicore coated optical fiber has a structure in which two, four, or eight-core optical fiber strands 31 are collectively coated with a resin coating portion 32. The number of cores may be selected as desired.

Although ultraviolet setting or thermosetting resin is disclosed as the common coating rein according to the present invention, the present invention is not limited in any way by such disclosures.

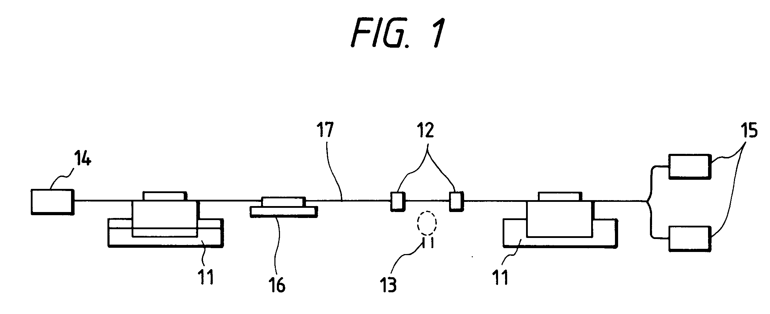

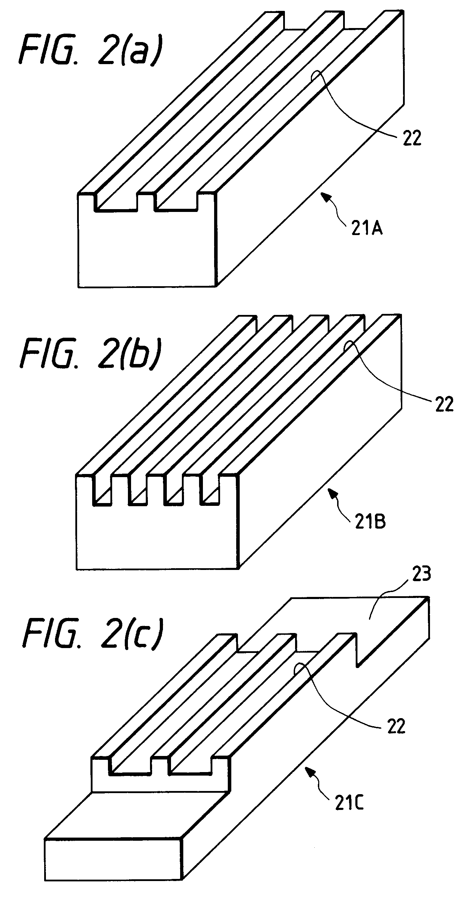

Referring now to FIGS. 1 and 2, a detailed description illustrating a method for producing an optical fiber coupler according to the present invention is provided.

As illustrated in FIG. 1, production begins by removing the coating resin of a multicore coated optical fiber 17. An exposed glass portion is fixed by optical fiber clampers 12. A micro-torch 13 then heats and fuses the fixed glass portion. Next, the optical fiber clampers 12 are released and the fused portion is further heated as tension is applied to the fused optical fiber. The fused optical fiber is thereby extended. Reference numeral 11 designates an extending stage. While the heating and extending occurs, a light source 14 and a power meter 15 monitors the light branching state of the optical fiber coupler. The extending process ceases when a predetermined branching state is reached.

Next, a reinforcing casing support stage 16 is moved so as to set a reinforcing casing into a predetermined position. An adhesive is then applied and hardened. Simultaneously, protective coating layer portions of the optical fiber strands, which are located on the portions except the non-extended portions in the extending direction, may be adhesion-fixed.

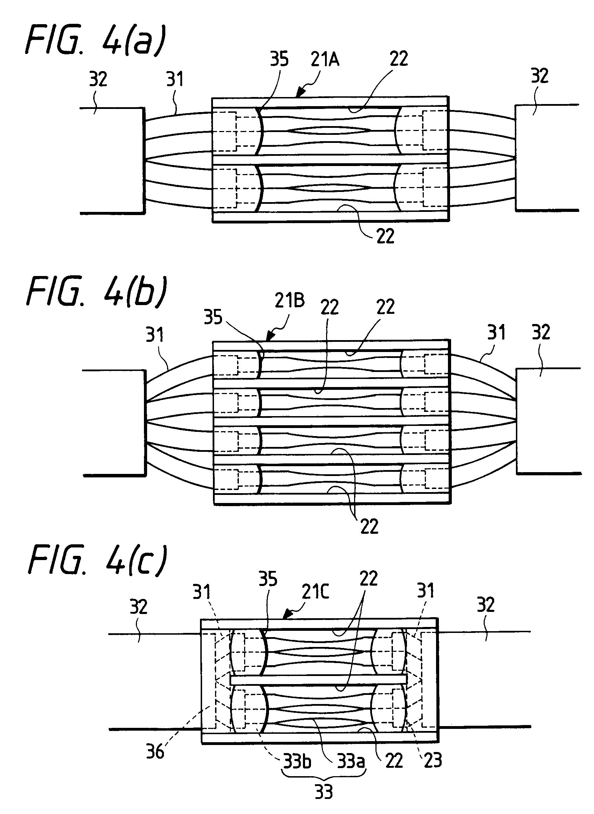

Reinforcing casings 21A and 21B, having a plurality of grooves 22, are illustrated in FIGS. 2(a) and 2(b), respectively. A resin coating portion 32 is disposed outside of the reinforcing casings 21A and 21B, as illustrated in FIGS. 4(a) and 4(b), respectively.

Referring now to FIG. 2(c), a reinforcing casing 21C is configured whereby notched portions 23 are formed to abut the non-extended portion of the optical fiber. The notched portions 23 are positioned so that grooves 22 are provided only in the central portion of the reinforcing casing 21C. Referring now to FIG. 4(c), a resin coating portion 32 may be disposed inside or outside the reinforcing casing 21C.

In the above embodiments, the reinforcing casing is required to have substantially the same coefficient of linear expansion as that of an optical fiber. It is preferable that the material's coefficient of linear expansion be not larger than 1×10⁻⁵/°C. The reinforcing casing is generally made from quartz, LCP, FRP, Invar alloy, ceramic, crystal glass, or the like material.

Although the disclosure of this patent application only makes reference to an ultraviolet setting and a thermosetting adhesive, the present invention is not limited in any way by to such a setting and/or adhesive.

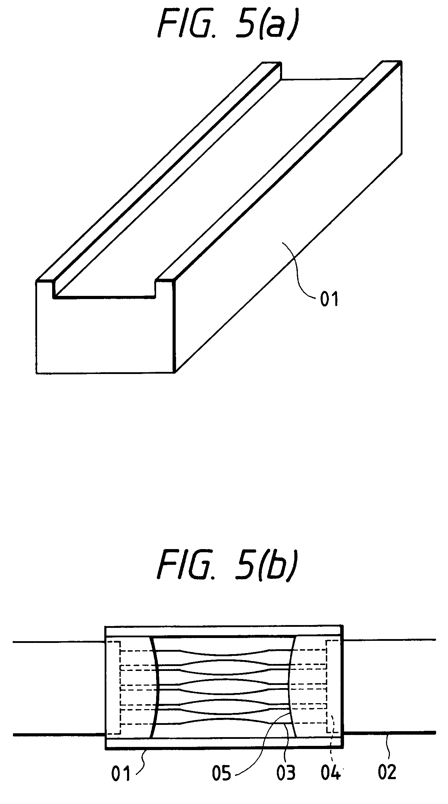

Referring now to FIGS. 5(a) and 5(b), conventional multicore optical fiber couplers are produced by fixing coated optical fibers 02 by using a reinforcing base 01. The optical fiber's non-extended portions 03 and coating portions 04 of the glass portions are fixed by using an adhesive 05. The area occupied by the fixing adhesive is relatively large compared to the size of the reinforcing casing.

The large amount of fixing adhesive required causes complications in the conventional optical fiber coupler. The reinforcing casing possesses a coefficient of linear expansion that is equal to or substantially the same as the coefficient of linear expansion of the optical fiber in the casing. However, the coefficient of linear expansion of the fixing adhesive considerably differs from the coefficient of linear expansion of the optical fiber.

External forces -- e.g., temperature change, high humidity -- can generate stress in the light coupling portion of the optical fiber coupler. Because the fixing adhesive possesses a different coefficient of linear expansion than that of the optical fiber, the stress causes deformation to result in the adhesive. Consequently, deformation of the adhesive can cause a remarkable change in the transmission characteristic of the optical fiber coupler.

According to the present invention, this problem is overcome by decreasing the quantity of adhesive needed by forming a plurality of grooves in the reinforcing casing. The arrangement of the optical fiber coupler thus allows a stable characteristic to be realized, even under external forces such as temperature change and high humidity.

Descriptions of preferred examples are provided below, showing the effects of the present invention.

### EXAMPLES OF PREFERRED EMBODIMENTS

A coupler having a rate of branching of 50% at wavelength of 1.3µm was produced according to the foregoing method, by using a four-core tape-like coated optical fiber wherein four optical fiber strands were collectively coated. Each of the four optical fiber strands include a 1.3µm wavelength single mode fiber having a difference in refractive index of 0.3% between the core and clad, a core diameter of 8µm, and a clad diameter of 125µm and are coated with a two-layer protective thin film.

FIGS. 4(a), 4(b), and 4(c) are exterior views of Examples 1, 2, and 3, respectively.

### EXAMPLE 1

In Example 1, a reinforcing casing 21A having two grooves 22, as represented in FIG. 2(a), was used. A two-core optical fiber strand 31 was accommodated in each of said grooves 22 and fixed by using an ultraviolet setting adhesive 35. The reinforcing casing 21A was made of crystal glass (having a coefficient of linear expansion of 1.5×10⁻⁷).

### EXAMPLE 2

In Example 2, a reinforcing casing 21B having four grooves 22, as represented in FIG. 2(b), was used. A single-core optical fiber strand 31 was accommodated in each of said grooves 22 and fixed by using an ultraviolet setting adhesive 35 in the same manner as shown in Example 1.

### EXAMPLE 3

In Example 3, a reinforcing casing 21C having notched portions 23 on the opposite sides, as represented in FIG. 2(c), was used. Non-extended portions 33b on the opposite sides of fused and extended portions 33a of glass portions 33 of a tape-like optical fiber strand 31 were fixed to the reinforcing casing by using an ultraviolet setting adhesive. The tape-like optical fiber strand 31 was fixed, together with the resin coating portions 32, on the notched portions 23 at the opposite end portions of the reinforcing casing 21C where no grooves 22 were formed, by using a soft thermosetting adhesive 36.

### COMPARATIVE EXAMPLE

As a comparative example, a coupler was produced wherein a multicore optical fiber coupler was fixed on a reinforcing base 01 having such a conventional structure as shown in FIG. 5(a). The same ultraviolet setting adhesive was used as in the above examples. FIG. 5(b) illustrates an exterior view of the conventional coupler.

**Table 1**

| HEAT-CYCLE TEST VALUATION RESULTS | | | | | |
|---|---|---|---|---|---|
| | | Example 1 | Example 2 | Example 3 | Comp. Example |
| Change of loss in heat-cycle (dB) | 1 core | + 0.11 | + 0.06 | + 0.04 | + 0.18 |
| | 2 cores | + 0.06 | + 0.13 | + 0.06 | + 0.38 |
| | 3 cores | - 0.03 | + 0.08 | - 0.05 | + 1.09 |
| | 4 cores | + 0.02 | - 0.02 | + 0.03 | + 0.56 |

Table 1 displays the results of a heat-cycle test with respect to the above couplers. A numerical figure shows a quantity of change of port insertion loss of one of straight and cross ports where the change of port insertion loss is larger than the other in the heat-cycle test. The heat-cycle was performed between -40 and 85°C.

Each of the couplers produced according to the present invention -- i.e., Examples 1, 2, and 3, -- displayed a stable characteristic within the range of temperatures of the heat-cycle. However, a remarkable characteristic change was generated in the conventional coupler -- i.e., the comparative example -- depending on the temperature of the heat-cycle.

Although the present invention has been described in detail with reference to its presently preferred embodiment, it will be understood by those of ordinary skill in the art that various modifications and improvements to the present invention are believed to be apparent to one skilled in the art. Accordingly, no limitation upon the invention is intended, except as set forth in the appended claims.

## Claims

1. A reinforced optical fiber coupler, comprising:
a reinforcing casing having a coefficient of linear expansion that is substantially the same as that of quartz, said casing having a plurality of grooves formed therein; and
a multicore coated optical fiber having a plurality of optical fiber strands positioned in parallel arrangement to each other and collectively coated with common coating resin to form a longitudinal coating resin said fiber strands being partially stripped of said coating resin to form exposed glass portions of said optical fibers, said exposed glass portions being fused and extended, non-extended portions, on the opposite side of the fused and extended glass portions of each of said plurality of optical fiber strands in the extending direction, being accommodated in at least two grooves of said reinforcing casing.

2. The reinforced optical fiber coupler as recited in claim 1, wherein each of said plurality of optical fiber strands is accommodated respectively in a groove of said reinforcing casing.

3. The reinforced optical fiber coupler as recited in claim 2, wherein said grooves are formed only in a central portion of said reinforcing casing.

4. The reinforced optical fiber coupler as recited in claim 2, wherein said coefficient of linear expansion of said reinforcing casing is not larger than 1×10⁻⁵/°C.

5. The reinforced optical fiber coupler as recited in claim 2, wherein said casing is made of crystal glass.

6. The reinforced optical fiber coupler as recited in claim 2, wherein said optical fiber is fixed in said grooves by a fixing adhesive.

7. The reinforced optical fiber coupler as recited in claim 6, wherein said adhesive comprises an ultraviolet setting adhesive.

8. The reinforced optical fiber coupler as recited in claim 6, wherein said adhesive comprises a thermosetting resin.

9. A method for producing a reinforced optical fiber coupler comprising the steps of:
partially removing a longitudinal coating resin of a multicore coated optical fiber, formed by a plurality of optical fiber strands positioned in parallel arrangement to each other and collectively coated with a common coating resin, so as to expose glass portions of said optical fiber strands;
fusing and extending said exposed glass portions of said optical fiber strands; and
accommodating non-extended portions on the opposite sides of a fused and extended portion of said glass portion of each of said plurality of said optical fiber strands in the extending direction in at least two grooves formed in a reinforcing casing having substantially the same coefficient of linear expansion as that of quartz.

10. The method as recited in claim 9, wherein each strand of said plurality of optical fiber strands is accommodated respectively in a groove of said reinforcing casing.

11. The method as recited in claim 10, further comprising the step of fixing each optical fiber in a groove using a fixing adhesive.

12. The method as recited in claim 11, wherein said adhesive comprises an ultraviolet setting adhesive.

13. The method as recited in claim 11, wherein said adhesive comprises a thermosetting resin.
